# EUROPEAN PATENT APPLICATION

(11) **EP 4 306 250 A1**
(43) Date of publication of application: **17.01.2024**
(21) Application number: 23174727.0
(22) Date of filing: 23.05.2023
(51) Int. Cl.: B23D 51/02, B27G 19/10, B23Q 9/00, B27B 9/04

(54) **TRACK SAW WITH MOVABLE SPLINTER STRIP**

(30) Priority: 26.05.2022 US 202263346128 P
(71) Applicant: Milwaukee Electric Tool Corporation, Brookfield, WI 53005 (US)
(72) Inventor: DIDIER, Christopher M., Milwaukee, 53202 (US)
(74) Representative: Forresters IP LLP

(57) **Abstract**

A track, configured for use with a saw having a blade, including a track body having a side surface, a blade guide, and a splinter strip. The blade guide has an inboard side and an opposite outboard side. The blade guide is movable relative to the side surface between an inboard position in which the inboard side of the blade guide abuts the side surface and an outboard position in which a gap is formed between the inboard side of the blade guide and the side surface. The splinter strip is coupled to the outboard side of the blade guide. The splinter strip is configured to contact the blade to inhibit splintering of a workpiece while being a cut by the blade and the saw is moved along the track body.

## Description

### CROSS-REFERENCE TO RELATED APPLICATIONS

This application claims priority to U.S. Provisional Patent Application No. 63/346,128 filed on May 26, 2022, the entire content of which is incorporated herein by reference.

### FIELD OF THE INVENTION

The present invention relates to track saws, and more specifically to track saws with movable splinter guards.

### BACKGROUND OF THE INVENTION

Some known track saw assemblies include tracks with sacrificial edge strips fixed thereto. Edge strips are configured to inhibit splintering of workpieces once cut by a blade of the track saw during a first use thereof. Track saws have lower blade guards that expose the blade during use and cover the blade when not in use. However, known lower blade guards can be prone to taking too long to retract and cover the blade, or binding to never return to cover the blade, and the like.

### SUMMARY OF THE INVENTION

The present invention provides, in one aspect, a track configured for use with a saw having a blade. The track includes a track body having a side surface, a blade guide, and a splinter strip. The blade guide has an inboard side and an opposite outboard side. The blade guide is movable relative to the side surface between an inboard position in which the inboard side of the blade guide abuts the side surface and an outboard position in which a gap is formed between the inboard side of the blade guide and the side surface. The splinter strip is coupled to the outboard side of the blade guide. The splinter strip is configured to contact the blade to inhibit splintering of a workpiece while being cut by the blade and the saw is moved along the track body.

The present invention provides, in another aspect, a track configured for use with a saw having a blade. The track includes a track body having a side surface, a first link, a second link, a blade guide, and a splinter strip. The first link is pivotably coupled to the track body. The second link is pivotably coupled to the track body and oriented parallel with the first link. The blade guide is pivotably coupled to the first link and the second link. The blade guide has an inboard side and an opposite outboard side. The blade guide is movable relative to the side surface between an inboard position in which the inboard side of the blade guide abuts the side surface and an outboard position in which a gap is formed between the inboard side of the blade guide and the side surface. The splinter strip is coupled to the outboard side of the blade guide. The splinter strip is configured to contact the blade to inhibit splintering of a workpiece while being cut by the blade and the saw is moved along the track body.

The present invention provides, in another aspect, a track saw assembly configured to be supported by and make a cut in a workpiece, the track saw assembly including a saw unit, a track body, and a blade guide. The saw unit includes a shoe, a motor mounted upon the shoe, and a blade rotatably coupled to the motor. The saw unit further includes a blade guard movable between a covering position in which the blade is covered and a retracted position in which the blade is exposed. The blade guard is biased towards the covering position. The track body has a first end, a second end, and a side surface. The track body is configured to guide the saw unit between a home position adjacent the first end and an advanced position adjacent the second end. An intermediate position is located between the home position and the advanced position. The blade guide is coupled to the track body, and the blade guide has an inboard side and an opposite outboard side. The blade guide is movable relative to the side surface between an inboard position in which the inboard side of the blade guide abuts the side surface and an outboard position in which a gap is formed between the inboard side of the blade guide and the side surface. As the saw unit is moved from the home position towards the advanced position, the blade guard contacts the blade guide to move the blade guard from the covering position to the retracted position. With the saw in the advanced or the intermediate position, and in response to the track body being moved away from the workpiece, the blade guide is configured to be retracted to the inboard position. As a result of the retraction of the blade guide, the blade guard is returned to the covering position.

The present invention provides, in another aspect, a track configured for use with a saw having a blade, the track comprising:
a track body having a side surface;
a blade guide having an inboard side and an opposite outboard side, the blade guide being movable relative to the side surface between an inboard position in which the inboard side of the blade guide abuts the side surface and an outboard position in which a gap is formed between the inboard side of the blade guide and the side surface; and
a splinter strip coupled to the outboard side of the blade guide, the splinter strip being configured to contact the blade to inhibit splintering of a workpiece while being cut by the blade and the saw is moved along the track body.

The blade guide may be coupled to the track body such that the blade guide remains parallel relative to the side surface in the inboard position, the outboard position, and during a transition between the inboard position and the outboard position.

The track may be configured to support a saw unit including a blade and a blade guard which may be movable between a covering position in which the blade is covered and a retracted position in which the blade is exposed, and wherein the gap is a first gap formed between the inboard side of the blade guide and the side surface, and wherein in the inboard position, a second gap is formed between the outboard side of the blade guide and an interaction line which represents a threshold for which the blade guide must extend beyond for an end surface of the blade guide to be operable to interact with the blade guard.

The track may further comprise a pin coupled to the blade guide, wherein the blade guide may be movable from the inboard position towards the outboard position upon abutment of the pin with an edge of a workpiece upon which the track rests and in response to relative movement between the track body and the workpiece.

The track may further comprise at least one link pivotably coupling the blade guide to the track body.

During a transition between the inboard position and the outboard position, the blade guide may be configured to translate along an arcuate path relative to the track body.

The track may further include a biasing member configured to bias the blade guide towards the inboard position.

The present invention provides, in another aspect, a track configured for use with a saw having a blade, the track comprising:
a track body having a side surface;
a first link pivotably coupled to the track body,
a second link pivotably coupled to the track body and oriented parallel with the first link,
a blade guide pivotably coupled to the first link and the second link, the blade guide having an inboard side and an opposite outboard side, the blade guide being movable relative to the side surface between an inboard position, in which the inboard side of the blade guide abuts the side surface, and an outboard position, in which a gap is formed between the inboard side of the blade guide and the side surface; and
a splinter strip coupled to the outboard side of the blade guide, the splinter strip being configured to contact the blade to inhibit splintering of a workpiece while being cut by the blade and the saw is moved along the track body.

The track body, the first link, the second link, and the blade guide together may function as a four-bar linkage such that the blade guide remains parallel relative to the side surface in the inboard position, the outboard position, and during a transition between the inboard position and the outboard position.

The track may further comprise a retainer configured to inhibit over-pivoting of the second link beyond a desired angle.

The track may further comprise a first pin coupling the first link to the track body and a second pin coupling the first link to the blade guide.

The second pin may extend downward from the blade guide in a vertical direction and may be configured to abut an edge of a workpiece to transition the blade guide between the inboard position and the outboard position.

The present invention provides, in another aspect, a track saw assembly configured to be supported by and make a cut in a workpiece, the track saw assembly comprising:
a saw unit including a shoe, a motor mounted upon the shoe, a blade rotatably coupled to the motor, and a blade guard movable between a covering position in which the blade is covered and a retracted position in which the blade is exposed;
a track body having a first end, a second end, and a side surface, the track body being configured to guide the saw unit between a home position adjacent the first end and an advanced position adjacent the second end, an intermediate position being located between the home position and the advanced position;
a blade guide coupled to the track body, the blade guide having an inboard side and an opposite outboard side, the blade guide being movable relative to the side surface between an inboard position in which the inboard side of the blade guide abuts the side surface and an outboard position in which a gap is formed between the inboard side of the blade guide and the side surface;
wherein, as the saw unit is moved from the home position to the advanced position, the blade guard contacts the blade guide to move the blade guard from the covering position to the retracted position, and
wherein, with the saw unit in the advanced position or the intermediate position, and in response to the track body being moved away from the workpiece, the blade guide is configured to be retracted to the inboard position, and as a result, the blade guard is returned to the covering position.

The track saw assembly may further comprise a pin coupled to the blade guide, wherein the pin is configured to engage an edge of a workpiece to move the blade guide from the inboard position toward the outboard position in response to an applied force on the track body oriented transverse to the workpiece, and wherein in response to the applied force on the track body being removed, the pin is disengaged from the edge of the workpiece to move the blade guide from the outboard position toward the inboard position.

After the blade guide is retracted to the inboard position, the blade guard may be configured to be returned to the covering position in less than 0.2 seconds.

The track saw assembly may further comprise a first biasing member configured to bias the blade guard towards the retracted position and a second biasing member configured to bias the blade guide towards the inboard position.

The track saw assembly may further comprise a pin coupled to the blade guide, and wherein the blade guide may be retracted towards the inboard position upon lifting the track saw assembly from a workpiece and corresponding misalignment of the pin from an edge of the workpiece.

As the saw unit is moved from the advanced position toward the home position, the blade guard may be disengaged with the blade guide such that the blade guard returns toward the covering position.

The track saw assembly may further comprise a third biasing member configured to bias the saw unit towards the home position.

The blade guide may be coupled to the track body such that the blade guide remains parallel to the side surface in the inboard position, the outboard position, and during a transition between the inboard position and the outboard position.

Other features and aspects of the invention will become apparent by consideration of the following detailed description and accompanying drawings.

### BRIEF DESCRIPTION OF THE DRAWINGS

FIG. 1 is a perspective view of a track saw assembly including a track and a saw unit.
FIG. 2 is a perspective view of the track.
FIG. 3 is another perspective view of the track along with a shoe of the saw unit.
FIG. 4 is another perspective view of the track and the saw unit.
FIG. 5 is a plan view of a track in accordance with an embodiment of the invention, including a blade guide in an inboard position.
FIG. 6 is a plan view of the track of FIG. 5 with the blade guide in an outboard position.
FIG. 6A is a plan view of the track of FIG. 5 with the blade guide in an outboard position and oriented at a miter angle relative to a workpiece.
FIG. 7 is a perspective view of the track and the saw unit prior to making a cut in the workpiece.
FIG. 8 is another perspective view of the track and the saw unit prior to making the cut in the workpiece.
FIG. 9 is a perspective view of the track and the saw unit immediately after having made the cut in the workpiece.
FIG. 10 is a perspective view of the track and the saw unit after having made the cut in the workpiece and being returned to the inboard position.
FIG. 11 is an end view of the track and the saw unit after having made the cut in the workpiece and being returned to the inboard position.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

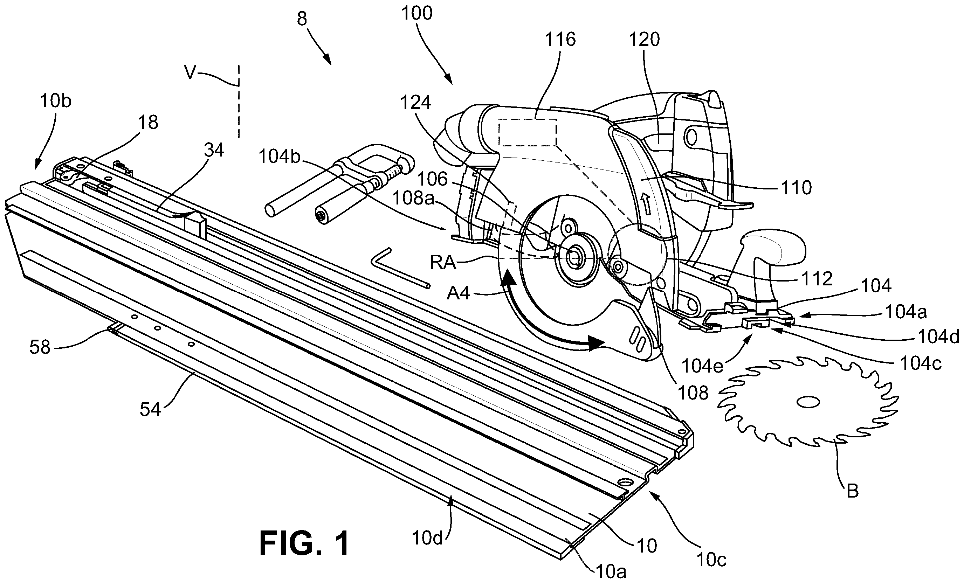

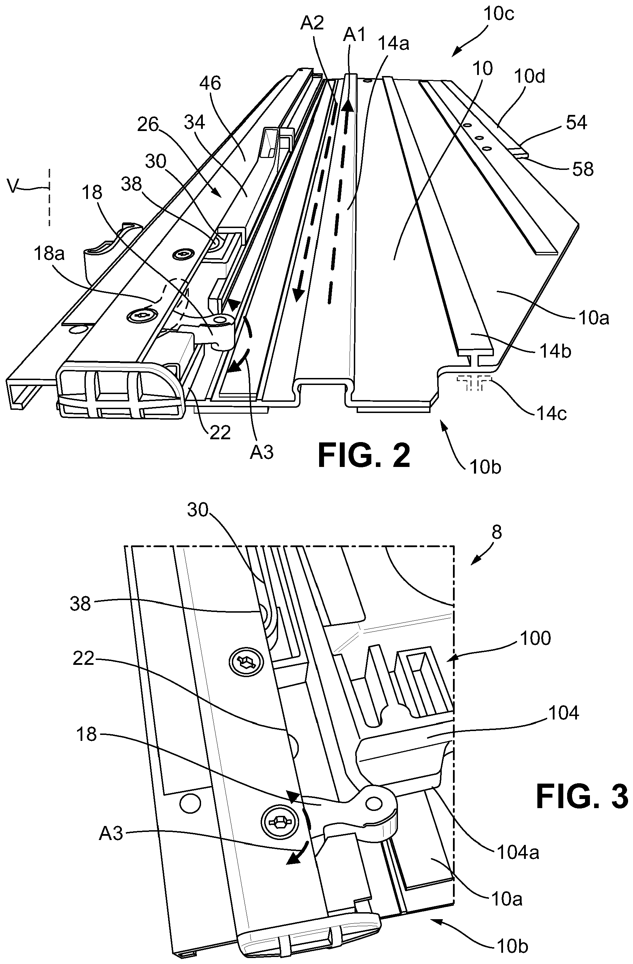

FIGS. 1-4 illustrate a track saw assembly 8 including a track 10 and a track saw 100 (i.e., a saw unit). The track 10 is configured to rest upon a workpiece W to be cut by the track saw 100. The track saw 100 (FIG. 1) is configured to slidably translate along the track 10 to make the cut in the workpiece W. As best illustrated in FIG. 2, the track 10 includes a track body 10a having a first end 10b, an opposite second end 10c, and a side surface 10d. The side surface 10d that is adjacent a blade B of the track saw 100 when the track saw 100 is mounted on the track 10. In the illustrated embodiment, the side surface 10d is on a right-hand side of the track 10. Other embodiments may employ side surfaces 10d on a left-hand side or another side of the track 10.

The track saw 100 is movable (i.e., translatable, advanceable) along an advancing direction A1 from the first end 10b towards the second end 10c. The track saw 100 is also movable (i.e., translatable, retreatable) along a retreating direction A2 from the second end 10c towards the first end 10b. As the track saw 100 moves along either the advancing direction A1 or the retreating direction A2, the blade B of the track saw 100 is positioned beyond but adjacent the side surface 10d.

The track saw 100 includes a shoe 104 with a front end 104a (FIG. 1) and a rear end 104b (FIG. 1). The track 11 has a primary guide 14a and a secondary guide 14b. The primary guide 14a and the secondary guide 14b extend in a direction parallel to each other and parallel to the advancing direction A1. The shoe 104 has a surface 104c with a first channel 104d dimensioned in correspondence with the primary guide 14a. Similarly, the surface 104c has a second channel 104e dimensioned in correspondence with the secondary guide 14b. Accordingly, the surface 104c of the shoe 104 is configured to rest upon the track body 11a with the first channel 104d receiving the primary guide 14a and the second channel 104e receiving the secondary guide 14b. As shown in FIG. 2, a cross-section of the primary guide 14a taken perpendicular relative to the advancing direction A1 is generally U-shaped, and the secondary guide 14b is generally T-shaped. Different shaped guides 14a, 14b are possible. For example, the secondary guide 14b may be alternatively dimensioned as a replacement secondary guide 14c illustrated in FIG. 2 as two oppositely facing L-shaped profiles extending from the track body 10a. The secondary guide 14b and the replacement secondary guide 14c may inhibit lifting of the track saw 100 from the track 10 once the track 10 receives the track saw 100.

The track 10 further includes a stop member 18 configured to inhibit inadvertent removal of the track saw 100 from the track 10 once the track 10 receives the track saw 100 (FIGS. 2 and 3). The stop member 18 is biased to a closed position (illustrated in FIG. 2 in solid lines as the stop member 18) in which the stop member 18 is located between the primary guide 14a and a retention wall 22. Prior to operation of the track saw assembly 8, the track saw 100 is secured to the track 10. In the illustrated embodiment, to secure the track saw 100 to the track 10, the track saw 100 is moved in the advancing direction A1 with the shoe 104 thereof being received by the primary guide 14a and the secondary guide 14b of the track 10. While moving in the advancing direction A1 with the shoe 104, the shoe 104 is received by the primary guide 14a and the secondary guide 14b. As the track saw 100 is translated along the advancing direction A1, the stop member 18 is pushed by the front end 104a of the shoe 104 to pivot the stop member 18 about a pivot arrow A3 to a retracted position (illustrated in FIG. 2 in dashed lines as the stop member 18a) within a retention wall 22 of the track 10. The retention wall 22 extends generally parallel to the primary guide 14a and the secondary guide 14b. Once the stop member 18 is retracted to the retracted position, the shoe 104 is further translated until the rear end 104b of the shoe 104 is advanced beyond the stop member 18. At this time, the stop member 18 is returned to the closed position due to the bias against the stop member 18. As the stop member 18 returns to the closed position, the stop member 18 again pivots about the pivot arrow A3. The track saw 100 is then restricted from removal from the track 10 until a user moves the stop member 18 along the pivot arrow A3 to the retracted position (illustrated as stop member 18a). Once again positioned in the retracted position (illustrated as stop member 18a), the rear end 104b of the shoe 104 can be further retreated (e.g., moved, translated) along the retreating direction A2 to remove the track saw 100 from the track 10. While the illustrated stop member 18 is pivotable (i.e., rotatable) about the pivot arrow A3, other similar stop members 18 are possible, such as translating stop members 18.

The track 10 further includes a return mechanism 26 (FIGS. 2 and 3) configured to bias the track saw 100 toward the first end 10b of the track 10 and against the stop member 18 (i.e., to a "home" position). The return mechanism 26 includes a tensioning member 30 (e.g., a Bungee cord), a sled 34, and a plurality of pulleys 38. The sled 34 is configured to engage the shoe 104 when the track saw 100 is translated onto the track 10. The tensioning member 30 is fixed at one end thereof to the track 10 and fixed at the other end thereof to the sled 34. The pulleys 38 guide the tensioning member 30 to bias the sled 34 towards the home position. When a user translates the track saw 100 along the advancing direction A1, the sled 34 is translated with the shoe 104, and the tensioning member 30 is tensioned (i.e., loaded). Once adjacent the second end 10c, the user can then release (and/or lighten a force pushing in the advancing direction A1) the track saw 100, and the tension in the tensioning member 30 will be spent (i.e., unloaded) to retract the track saw 100 along the retreating direction A2 to the home position where the rear end 104b of the shoe 104 abuts the stop member 18. In the illustrated embodiment, the sled 34 rides along a sled channel 42 located within the retention wall 22. The tensioning member 30 and pulleys 38 are located in a return mechanism slot 46 adjacent the sled channel 42.

FIG. 1 further illustrates the track saw 100. The blade B of the track saw 100 is configured to be coupled to an arbor 106. When engaged by the arbor 106, the blade B is aligned with a rotary axis RA. Also in this position, the blade B is surrounded in part by a blade guard (i.e., a lower blade guard) 108. FIG. 1 illustrates the blade guard 108 in a covering position in which the blade B would be covered when the blade B is attached to the arbor 106. As described below, the blade guard 108 is pivotable about the rotary axis RA from the covering position to a retracted position (illustrated as a dashed-line blade guard 108a) in which at least a lower portion of the blade B is exposed. The blade B is also surrounded in part by an upper blade guard 110. In the illustrated embodiment, the upper blade guard 110 is fixed relative to the shoe 104. The blade B may be released from the arbor 106 to exchange the blade B. The arbor 106 is coupled to a motor 112 (e.g., either directly or via an intermediate gear train) to receive torque therefrom.

The motor 112, via a motor housing, is mounted to the shoe 104. The motor 112 is electrically coupled to a power source 116 (e.g., an onboard battery pack) and a trigger 120. When the trigger 120 is pulled, or upon another triggering condition, electrical current is supplied from the power source 116 to operate the motor 112. As a result, the arbor 106 and thus the blade B are rotated about the rotary axis RA in a rotational direction A4. As described above, the blade guard 108 is pivotable relative to the upper blade guard 110 and thus the shoe 104 about the rotary axis RA in the rotational direction A4. The track saw 100 includes a spring 124 biasing the blade guard 108 to the covering position. The illustrated spring 124 is a compression spring. However, other biasing members such as torsion springs, elastic members, resilient members, etc. may replace the spring 124 to bias the blade guard 108 to the covering position.

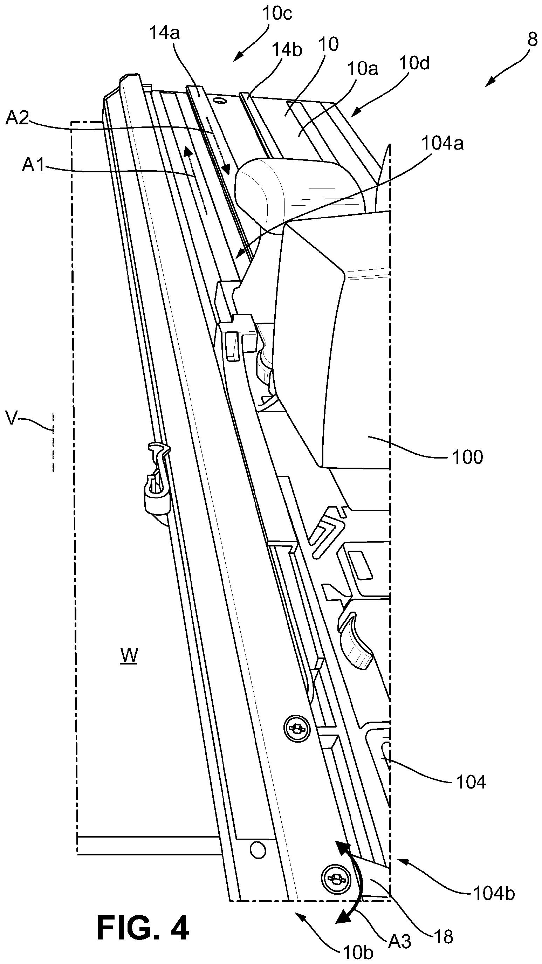

FIGS. 1 and 4 illustrate the track 10. The side surface 10d of the track 10 is on an opposite side of the primary guide 14a as the return mechanism slot 46. In the illustrated embodiment, a visibly clear sacrificial splinter strip 54 (FIG. 1) is attached to the side surface 10d. In the embodiment of FIGS. 1-4, the splinter strip 54 is coupled to the side surface 10d of the track body 10a. The splinter strip 54 is cut by the blade B upon first use track saw assembly 8. Upon translation of the track saw 100 along the advancing direction A1, the blade guard 108 contacts an end surface 58 of the side surface 10d. Upon further translation of the track saw 100 along the advancing direction A1, the blade guard 108 is rotated in the rotational direction A4 toward the retracted position to expose the blade B to a workpiece W. At this time, the blade guard 108 rests upon the track body 10a with the spring 124 pressing the blade guard 108 against the track body 10a. Once the blade B is exposed and the track saw 100 is further advanced along the advancing direction A1, the cut is made. Upon release or partial release of the track saw 100 by the user, the track saw 100 is retracted by the tensioning member 30 to the home position with the rear end 104b of the shoe 104 abutting the stop 18 (as illustrated in FIG. 4). As the track saw 100 returns to the home position, the blade guard 108 emerges from the end surface 58, and is thus gradually returned toward the covering position (as illustrated in FIG. 1) to again cover the blade B. Accordingly, during normal use of the track saw assembly 8, the blade B is exposed to the workpiece W only while making a cut therein, and the blade B is automatically covered by the blade guard 108 upon retreat of the track saw 100 along the retreating direction A2. In this embodiment, covering of the blade B begins once the blade guard 108 is retreated enough such that the blade guard 108 emerges from contact with the end surface 58. In normal use, the tensioning member 30 has enough force to return the track saw 100 to the home position.

However, return of the lower blade guard 108 from the retracted position to the covered position as described above with the track saw assembly 8 may occur too slowly, or may be inhibited altogether. For example, the track saw 100 must be retreated along the retreating direction A2 such that the blade guard 108 emerges from contact with the end surface 58 prior to return of the blade guard 108 from the retracted position to the covered position. The end surface 58 may be a sufficient distance (e.g., more than, for example, 10 inches) from the second end 10c of the track 10. Accordingly, the time required for the blade guard 108 to emerge from contact with the end surface 58 may be unacceptably long. Also, return of the blade guard 108 to the covered position may be slowed and/or inhibited by insufficient force applied by the tensioning member 30. For example, the tensioning member 30 may be severed, or have insufficient force to overcome friction between the shoe 104 and the track 10. This friction may be caused by, for example, debris between the shoe 104 and the track 10. Other possible sources of friction may include the track 10 being slightly bent or otherwise misshapen to inhibit smooth sliding of the shoe 104 along the track 10.

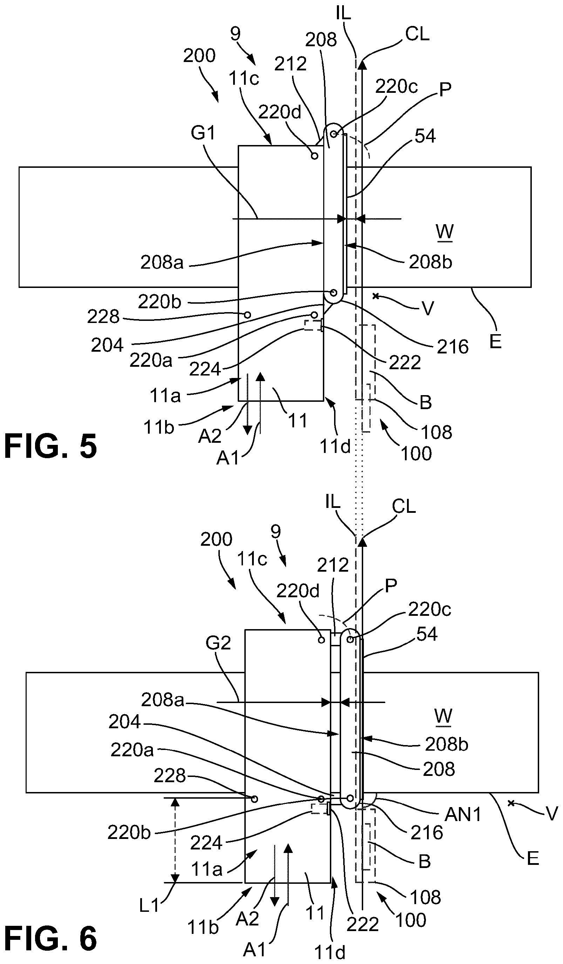

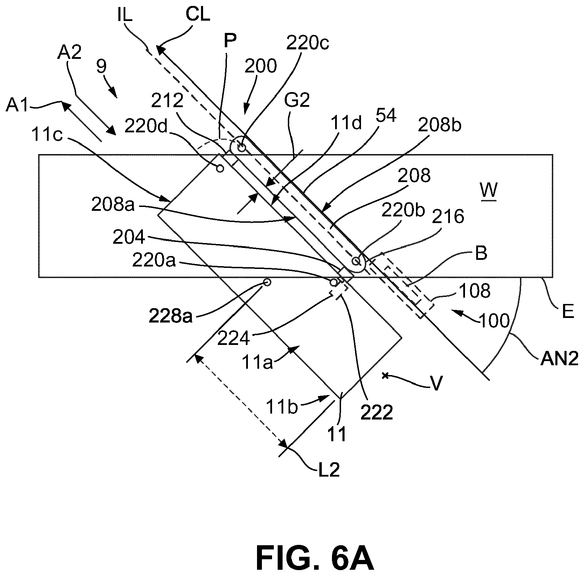

FIGS. 5-11 illustrate a track saw assembly 9 in accordance with an embodiment of the invention. The track saw assembly 9 includes a track 11 and the above-described track saw 100. The track 11 has many of the above-described features of the track 10. For example, the track 11 has a track body 11a, first end 11b, second end 11c, and side surface 11d like the track 10. The track 11 also includes the return mechanism 26 as described above. However, the track 11 includes a blade guide 208 coupled to the track body 11a that is movable between an inboard position (FIG. 5) and an outboard position (FIG. 6) relative to the track body 11a. The movable blade guide 208, as a whole, provides improved means for returning the blade guard 108 from the retracted position to the covering position.

With the track saw 100 engaging the track 11 in a similar manner as discussed with the track saw 100 and the track 100 described above, the user can maneuver the track saw assembly 9 into position adjacent an edge E of a workpiece W for a cut. The track saw assembly 9 may be lifted in the vertical direction V away from the workpiece W. Alternatively, the track saw assembly 9 may be translated or otherwise moved into abutment with the edge E.

FIG. 5 illustrates a plan view of the track saw assembly 9 and the blade guide 208 in the inboard position. In the illustrated embodiment, the blade guide 208 is a floating link in a planar four-bar linkage 200, which also includes a driving link 204 pivotably coupled with the track body 11a and a driven link 212 also pivotably coupled to the track body 11a. Opposite ends of the blade guide 208 a pivotably coupled, respectively, to the distal ends of the driving link 204 and the driven link 212. The blade guide 208 has an end surface 216 adjacent the first end 11b of the track 11. The blade guide 208 has an inboard side 208a and an opposite outboard side 208b. In the embodiment of FIGS. 5-11, the sacrificial splinter strip 54 is applied (e.g., coupled) to the outboard side 208b of the blade guide 208, and the splinter strip 54 extends away from the outboard side 208b in an outboard direction facing away from the track body 11a. The inboard side 208a is positioned closer to the track body 11a than the outboard side 208b. The outboard side 208b is further away from the track body 11a than the inboard side 208a. A series of pins 220a-220d pivotably connect the driving link 204, the blade guide 208, the driven link 212, and the track body 11a to one another. Accordingly, the linkage 200 permits the splinter strip 54 to be moved relative to the track body 11a in a direction perpendicular to the advancing direction A1 (i.e., in the outboard direction).

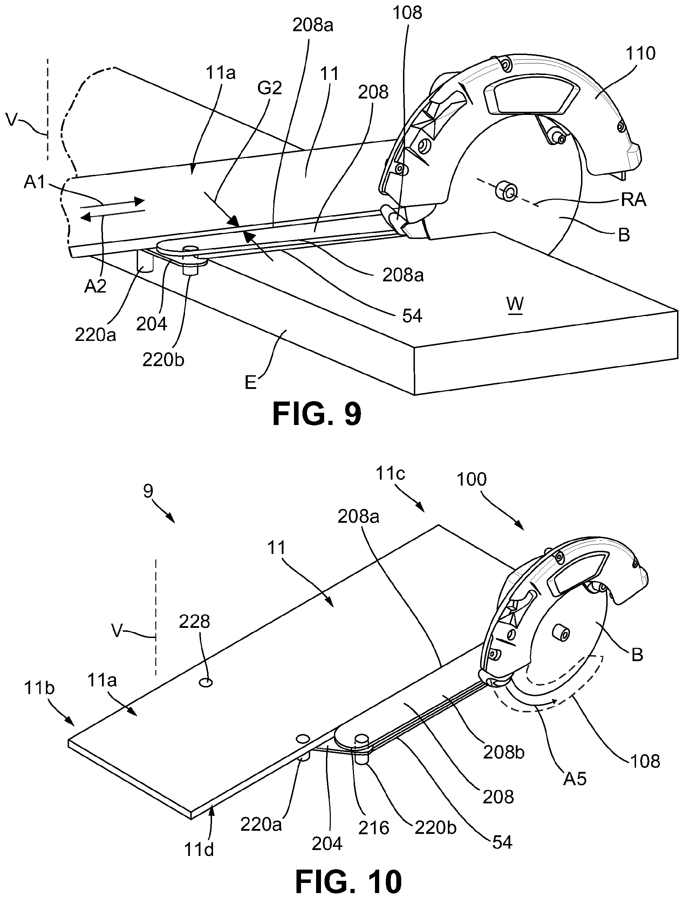

As illustrated in FIGS. 5 and 6, the pins 220a-220d rotatably couple the components of the linkage 200 to one another. The illustrated pin 220a rotatably couples the driving link 204 to the track body 11a. The illustrated pin 220b rotatably couples the driving link 204 to the blade guide 208. The illustrated pin 220c rotatably couples the blade guide 208 to the driven link 212. Finally, the illustrated pin 220d rotatably couples the driven link 212 to the track body 11a to complete the four-bar linkage 200. FIG. 9 further illustrates the pins 220a-220b. The rotary axis RA of the blade B is positioned on one side of the track 11. The pins 220a-220b each extend away from both the track 11 and the rotary axis RA. In other words, as illustrated in FIGS. 9 and 10, the pins 220a-220b extend downwardly from the track 11 in a vertical direction V. As viewed in FIGS. 5 and 6, the pins 220a-220b extend in the vertical direction V that extends into the page.

The linkage 200 is driven such that the blade guide 208 remains parallel to a side surface 11d of the track body 1 1a in the inboard position (FIG. 5), the outboard position (FIG. 6), and during a transition between the inboard position (FIG. 5) and the outboard position (FIG. 6).

FIG. 5 illustrates an inboard position of the linkage 200 in which the inboard side 208a of the blade guide 208 abuts the side surface 11d of the track 11. In the illustrated inboard position, a user has located the track saw assembly 9 adjacent the edge E of the workpiece W. The pin 220b abuts the workpiece W. However, the user has not yet applied sufficient force to move the linkage 200 to the outboard position. In the inboard position (FIG. 5), there is a gap G1 between the outboard side 208b of the blade guide 208 (more specifically, the splinter strip 54) and an interaction line IL. The interaction line IL represents a threshold for which the blade guide 208 must be extended beyond for an end surface 216 of the blade guide 208 to be operable to interact with the blade guard 108. As shown in FIG. 5, the blade guard 108 is at least partially positioned on an opposite side (i.e., the right-hand side) of the interaction line IL when compared to the end surface 216. Accordingly, the inboard position of the linkage 200 does not locate the end surface 216 for interaction with the blade guard 108 upon translation of the track saw 100 along the advancing direction A1.

The track saw assembly 9 further includes a spring 222 that biases the entire linkage 200 toward the inboard position (FIG. 5). The spring 222 is illustrated as a compression spring. However, other types of biasing members (e.g., torsion springs, elastic members, resilient members, etc.) may replace the spring 22 and bias the linkage 200 toward the inboard position (FIG. 5). In the illustrated embodiment, the spring 222 is positioned between the track body 11a and the driving link 204. Other positions of the spring 222 are possible. For example, the spring 222 may similarly bias the linkage 200 to the inboard position (FIG. 5) when positioned between the track body 11a and either the driven link 212 or the blade guide 208.

With continued reference to the inboard position of FIG. 5, the pin 220b is positioned in abutment with the edge E. FIGS. 9 and 10 provide further illustration of the extension of the pins 220a-220b along the vertical direction V and downwardly from the track body 11a. In other embodiments, another edge-abutting member (not shown) other than the pin 220b itself may configured to abut the edge E of the workpiece W. The edge-abutting member (not shown) may be connected to the driving link 204 along with the pins 220a-220b.

To move from the inboard position (FIG. 5) to the outboard position (FIG. 6), the user applies a force in the advancing direction A1 to translate the track 11 towards the edge E of the workpiece W. While the force is applied, the pin 220b remains in contact with the edge E of the workpiece W. The spring 222 is compressed by the user-applied force. In some embodiments, the pin 220a is brought into contact with the edge E of the workpiece W. As with the pin 220b, in other embodiments, another edge-abutting member (not shown) other than the pin 220a itself may configured to abut the edge E of the workpiece W. The edge-abutting member (not shown) may be connected to the driving link 204 along with the pins 220a-220b.

The user-applied force moves the blade guide 208 toward the outboard position. The user-applied force is counteracted by a normal force supplied by the edge E of the workpiece W. The normal force is applied to the pin 220b by the edge E. This imparts a moment to the driving link 204 in a counter-clockwise direction in the frame of reference of FIGS. 5 and 6. Due to the interconnection of the driving link 204, the blade guide 208, and the driven link 212, the blade guide 208 transmits the rotation of the driving link 204 to the driven link 212. Accordingly, the driven link 212 is caused to rotate in the same (e.g., counter-clockwise in the frame of reference of FIGS. 5 and 6) direction.

In the illustrated embodiment, the driving link 204 and the driven link 212 have the same length. Lengths of the driving linkage 204 and the driven linkage 212 are measured between respective pins 220a-220d which interconnect the driving linkage 204 and the driven linkage 212 to the blade guide 208. As such, the blade guide 208 remains parallel with the track 11 in the inboard position, the outboard position, and between the inboard position and the outboard position. As the driving link 204 and the driven link 212 have the same length, the blade guide 208 translates along an arcuate path P relative to the track body 11a. The arcuate path P generally extends between the inboard position and the outboard position. The illustrated arcuate path P follows the pin 220c between inboard and outboard positions of the linkage 200. Similar paths P may be drawn for example, for the pin 220b, or the blade guide 208 as a whole. It is envisioned that other embodiments may have otherwise shaped paths P. However, the blade guide 208 must at least be parallel to the advancing direction A1 in the inboard position and the outboard position.

During the transition from the inboard position (FIG. 5) to the outboard position (FIG. 6), the splinter strip 54 and optionally, the outboard side 208b of the splinter strip 54 traverses the interaction line IL. Accordingly, the splinter strip 54 is positioned adjacent a cut line CL. The cut line CL corresponds with the travel of the blade B as the track saw 100 translates along the track 11. During the transition from the inboard position (FIG. 5) to the outboard position (FIG. 6), the spring 222 is compressed (i.e., loaded).

Once in the outboard position (FIG. 6), there is a gap G2 between the blade guide 208 and the track body 11a. In the outboard position (FIG. 6), the end surface 216 of the blade guide 208 is at least partially positioned between the interaction line IL and the cut line CL. The blade guide 208 and the splinter strip 54 are parallel to the cut line CL. Prior to first use of the track saw assembly 9, a portion of the splinter strip 54 traverses the cut line CL. During the first use of the track saw assembly 9, the portion of the splinter strip 54 that traverses the cut line CL is cut from the splinter strip 54 by the blade B. As a result, the splinter strip 54 is aligned with the blade B for subsequent use.

In the outboard position, the driving link 204 may abut a retainer 224. The retainer 224 may extend downward from the track body 11a in the same direction as the pins 220a-220b (i.e., downwardly and in correspondence with the edge E of the workpiece, into the page as viewed in FIGS, 5, 6). The retainer 224 may provide a mechanical stop for the driving link 204 such that as a user continues to apply the force against the bias of the spring 222, the driving link 204 is held perpendicular to the edge E with the driving linkage 204 and the driven link 212 in fully extended positions relative to the track body 11a. The retainer 224 may inhibit over-pivoting of the driving link 204 beyond a desired angle. In the illustrated embodiment, the retainer 224 may inhibit over-pivoting of the driving link 204 beyond an angle (e.g., 90 degrees) corresponding with a direction extending perpendicularly from the edge E. In other embodiments, the driving link 204 itself may function as the retainer 224, with the driving link 204 being pressed against the edge E to hold the driving link 204 itself perpendicular to the edge E. In the illustrated outboard position, the driving link 204 and the driven link 212 are fully extended. The retainer 224 may provide a mechanical stop for the driven linkage 212 to be held in a position perpendicular to the edge E.

FIG. 6 illustrates an outboard position of the linkage 200 in which the blade guide 208 does not contact the track body 11a. As mentioned above, there is a gap G2 between the blade guide 208 and the track body 11a. More specifically, in the outboard position (FIG. 6), the inboard side 208a of the blade guide 208 is removed from the side surface 11d of the track body 11a with the gap G2 being measured perpendicularly from the advancing direction A1 and between the side surface 11d of the track body 11a and the inboard side 208a of the blade guide 208.

After the user applies sufficient force to move the entire track saw assembly 9 in the advancing direction A1 to cause the blade guide 208 to move into the outboard position (FIG. 6), the trigger 120 is pulled to operate the motor 112 and rotate the blade B, and the track saw 100 can be translated relative to the track 11 along the advancing direction A1 to perform a cut on the workpiece W. During translation of the track saw 100 along the advancing direction A1, the blade guard 108 contacts the end surface 216. Upon further translation of the track saw 100 along the advancing direction A1, the blade guard 108 is rotated about the rotary axis RA from the covering position to the retracted position to expose the blade B to the workpiece W. As the track saw 100 is further translated along the advancing direction A1, the blade B makes a cut in the workpiece W, and the spring 124 presses the blade guard 108 against the blade guide 208 in the vertical direction V. At this time, the blade guide 208 inhibits rotation of the blade guard 108 from the retracted position to the covering position.

At any time during or after making the cut (i.e., with the track saw 100 in the advanced position or the intermediate position between the home position and the advanced position) in the workpiece W, the user may lift the entire track saw assembly 9 off the workpiece W. In the illustrated embodiment, the track saw assembly 9 may be lifted in the vertical direction V out of the page as viewed in FIGS. 5-6. Also in the illustrated embodiment, the track 11 may be moved in the retraction direction A2 to move the track 11 and thus the linkage 200 to the inboard position (FIG. 5). In the illustrated embodiment, one or each of the pins 220a-220b may be removed from the edge E to disengage the track 11 from the workpiece W.

Other disengaging means may otherwise disengage the track 11 from the workpiece W. For example, the user may retract the entire track saw assembly 9 in the retraction direction A2 such that the miter pin 228 and the pin 220b are disengaged and further translated away from the edge E. Once disengaged from the workpiece W, the spring 222 biases the linkage 200 to the above-described inboard position (FIG. 5). During retraction from the outboard position (FIG. 6) to the inboard position (FIG. 5), the blade guard 108 emerges from the outboard surface 208b of the blade guide 208, and the blade guard 108 is immediately returned by the spring 124 to the covering position.

After the retraction of the linkage 200 to the inboard position (FIG. 5), the blade guard 108 is no-longer in alignment with the blade guide 208. The spring 124 biases the blade guard 108 to begin retraction of the blade guard 108 from the retracted position to the covering position thereof. More specifically, the outboard surface 208b and the splinter strip 54 of the blade guide 208 is moved inwardly towards the side surface 11d, with the outboard surface 208b traversing the interaction line II, such that the blade guard 108 no longer rests upon the blade guide 208. Retraction of the blade guard 108 from the retracted position to the covering position takes place prior to or simultaneously with the retraction of the track saw 100 from the advanced position (adjacent the second end 11c) to the home position (adjacent the first end 1 1b). In other words, the blade guard 108 may be retracted in the advanced position of the track saw 100 being positioned adjacent to the second end 11c of the track 11 or an intermediate position between the first end 11b and the second end 11c of the track 11. Accordingly, the track saw assembly 9 does not require retraction of the track saw 100 beyond the end surface 216 prior to initiating retraction of the blade guard 108. This may promote fast retraction of the blade guard 108 from the retracted position to the covering position thereof.

The entire retraction process of the blade guard 108 of the track saw assembly 9 may be shortened in contrast to the retraction process of the blade guard 108 of the track saw assembly 8. In the track saw assembly 9, the spring 222 initiates retraction of the blade guide 208 to the inboard position (FIG. 5). Once the blade guard 108 is no longer supported by the blade guide 208, the spring 124 biases the blade guard 108 from the retracted position to the covering position. Upon disengagement of the track 11 from the workpiece W, the blade guard 108 of the track saw assembly 9 may be retracted to the covering position in less than, for example, 0.5 seconds. In some embodiments, upon disengagement of the track 11 from the workpiece W, blade guard 108 of the track saw assembly 9 may be retracted to the covering position in less than, 0.2 seconds. In the illustrated embodiment, the track saw 100 may be returned to the home position by the tensioning member 30 in less than, for example, 0.5 seconds. In some embodiments, the track saw 100 may be returned to the home position by the tensioning member 30 in less than, for example, 0.3 seconds. In some embodiments, the spring 124 and the tensioning member 30 (e.g., the spring characteristics thereof) may be selected such that the blade guard 108 is returned to the covering position before the track saw 100 is returned to the home position.

In contrast, with reference to the track saw assembly 8 of FIGS. 1-4, upon the user's release of the track saw 100, the track saw 100 may be retracted to the home position by the tensioning member 30 in greater than, for example, 3 seconds. In some instances, upon the user's release of the track saw 100 of the track saw assembly 8, the track saw 100 may never be fully be retracted to the home position by the tensioning member 30. With continued reference to the track saw assembly 8 of FIGS. 1-4, upon the user's release of the track saw 100, the blade guard 108 may be retracted to the covering position in greater than 2.5 seconds. In some instances, upon the user's release of the track saw 100 of the track saw assembly 8, the track saw 100 may never be fully retracted to the covering position by the spring 124.

FIGS. 5-6 illustrate the track saw assembly 9 in an orientation perpendicular relative to the edge E of the workpiece W. In other words, as illustrated in FIGS. 5-6, the track saw assembly 9 is configured to make a cross-cut in the workpiece W, with the cut line CL being perpendicular to the edge E. As illustrated in FIG. 6, once the user applies sufficient force to overcome the force of the spring 222, the linkage 200 is moved to the outboard position. In the outboard position, the pin 220a contacts the edge E of the workpiece W. The pin 220a is positioned adjacent the side surface 11d of the track 11. The track 11 further includes a miter pin 228. The miter pin 228 extends in the same direction as the illustrated pin 220a. In other words, the miter pin 228 extends below the track 11 such that the miter pin 228 can abut the edge E of the workpiece W. In the illustrated embodiment, the miter pin 228 is positioned a given length L1 from the first end 11b of the track 11. The miter pin 228 is selectively movable between the first end 11b and the second end 11c of the track 11. The miter pin 228 can be moved along either the advancing direction A1 or the retreating direction A2 to change a cross-cut miter angle AN1 of the track 11 relative to the edge E. As illustrated in FIG. 6, the miter pin 228 is provided at the same length L1 when compared to the first pin 220a. Accordingly, the track saw assembly 9 is perpendicular with the edge E with the cross-cut miter angle AN1 of approximately 90 degrees.

In contrast with the position of the miter pin 228 in FIG. 6, the miter pin 228 illustrated in FIG. 6A is provided at a length L2 from the first end 11b of the track 11, the length L2 being different than the first length L1. The miter pin 228 is movable along either the advancing direction A1 or the retreating direction A2 when the user does not press the miter pin 228 against the edge E. Once the miter pin 228 is moved and secured at the length L2 (illustrated by miter pin 228a, FIG. 6A), when the user applies sufficient force to overcome the force of the spring 222, the linkage 200 is moved to the outboard position (FIG. 6A) with the pin 220a and the miter pin 228a contacting the edge E of the workpiece W. In this position, the track saw assembly 9 is positioned with an adjusted miter angle AN2 different than the cross-cut miter angle AN1. The adjusted miter angle AN2 may be, for example 30 degrees, 45 degrees, 60 degrees, 120 degrees, 135 degrees, 150 degrees or any other angle. Discrete position stops may be provided along the advancing direction A1 and on the track 11 such that the miter pin 228 can be quickly moved to a desired length L1, L2 for adjusting to the cross-cut miter angle AN1 or another desired miter angle AN2. For reference, FIG. 6A illustrates a miter angle AN2 of 45 degrees. Once in the outboard position as illustrated in FIG. 6A, the track saw 100 is capable of translating along the track 11 and making the cut in the workpiece W as described above with the track saw assembly 9 in the cross-cut and outboard position illustrated in FIG. 6.

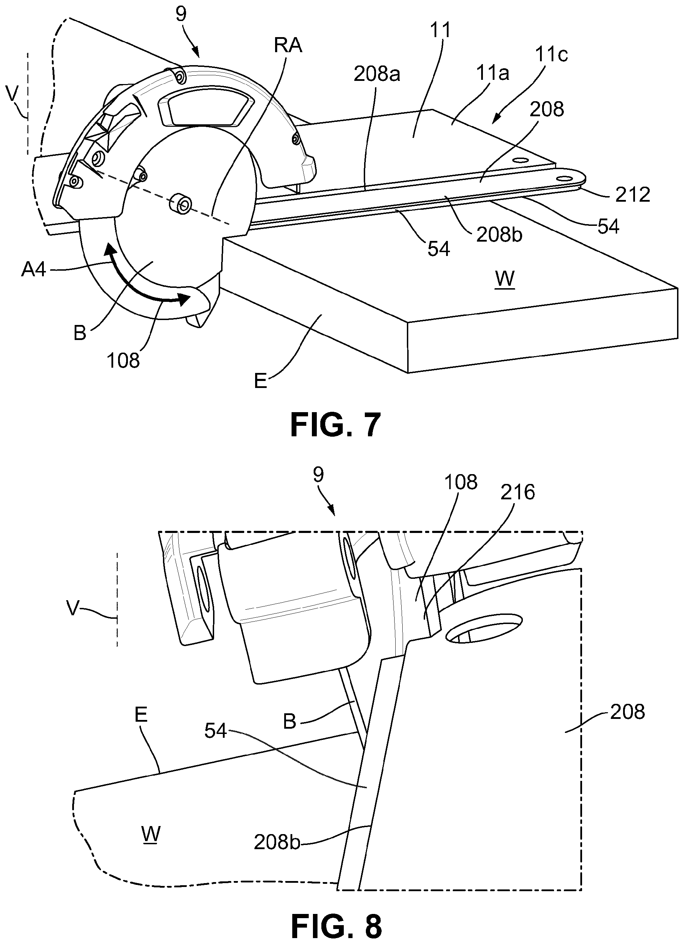

FIGS. 7-11 illustrate a cutting operation of the linkage 200 as well as the use of the track 11 and the track saw 100. In FIG. 7, the blade guard 108 is partially closed and the track saw 100 begins a cut in the workpiece W. In this position, as best illustrated in FIG. 8, the blade guard 108 abuts the end surface 216 of the blade guide 208. This causes the blade guard 108 to rotate about the arrow A4 (FIG. 7) to expose the blade B. The blade B creates the desired cut in the workpiece W upon further translation of the track saw 100 along the track 11 toward the second end 11c thereof.

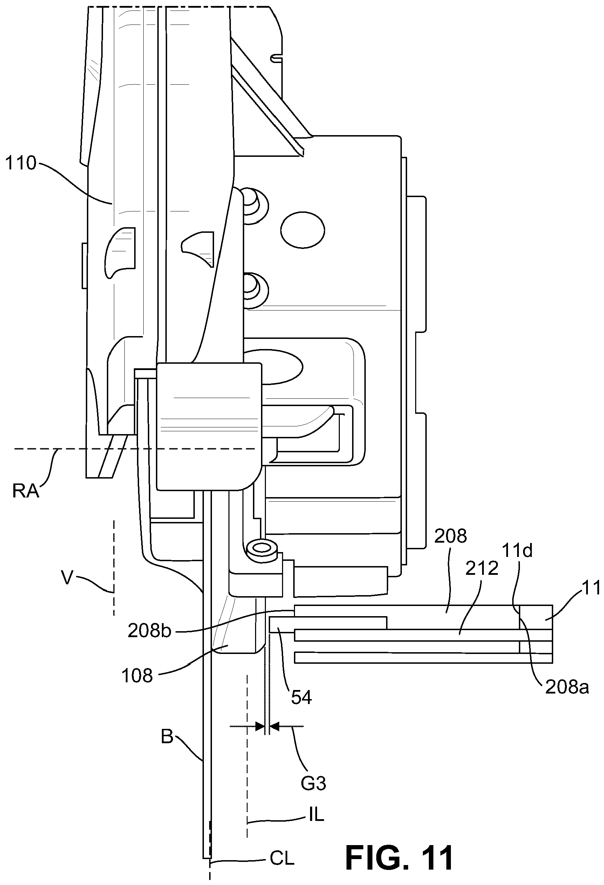

FIG. 9 illustrates the position of the track saw 100 after a cut is made in the workpiece W. As evidenced by the continued presence of the gap G2 in FIG. 9, the linkage 200 remains in the outboard position until a user removes the track 11 from the workpiece W. Once removed, the mechanism 20 returns to the inboard position (as illustrated in FIG. 10) with the gap G1 between the blade guide 208 and the interaction line IL. The blade guard 108 then is rotated along direction A5 (FIG. 10) to cover the blade B. As shown in the inboard position of FIG. 11, a gap G3 exists between the blade guard 108 and the splinter strip 54. This gap G3 permits the spring 124 to move the blade guard 108 form the retracted position to the covering position.

This return of the blade guard 108 along the arrow A5 is independent of the translation of the track saw 100 along the retreating direction A2 to the home position. In other words, retraction of the linkage 200 from the outboard position to the inboard position is operable independently of the return mechanism 26. Accordingly, the blade guard 108 can be moved from the retracted position to the covering position (e.g., "closed") prior to full retraction of the track saw 100 to the home position.

Although the invention has been described in detail with reference to certain preferred embodiments, variations and modifications exist within the scope and spirit of one or more independent aspects of the invention as described.

Various features of the disclosure are set forth in the following claims. When used in this specification and claims, the terms "comprises" and "comprising" and variations thereof mean that the specified features, steps or integers are included. The terms are not to be interpreted to exclude the presence of other features, steps or components.

### REPRESENTATIVE FEATURES

Representative features are set out in the following clauses, which stand alone or may be combined, in any combination, with one or more features disclosed in the text and/or drawings of the specification.
1. A track configured for use with a saw having a blade, the track comprising:
   a track body having a side surface;
   a blade guide having an inboard side and an opposite outboard side, the blade guide being movable relative to the side surface between an inboard position in which the inboard side of the blade guide abuts the side surface and an outboard position in which a gap is formed between the inboard side of the blade guide and the side surface; and
   a splinter strip coupled to the outboard side of the blade guide, the splinter strip being configured to contact the blade to inhibit splintering of a workpiece while being cut by the blade and the saw is moved along the track body.
2. The track of clause 1, wherein the blade guide is coupled to the track body such that the blade guide remains parallel relative to the side surface in the inboard position, the outboard position, and during a transition between the inboard position and the outboard position.
3. The track of clause 1, wherein the track is configured to support a saw unit including a blade and a blade guard which is movable between a covering position in which the blade is covered and a retracted position in which the blade is exposed, and wherein the gap is a first gap formed between the inboard side of the blade guide and the side surface, and wherein in the inboard position, a second gap is formed between the outboard side of the blade guide and an interaction line which represents a threshold for which the blade guide must extend beyond for an end surface of the blade guide to be operable to interact with the blade guard.
4. The track of clause 1, further comprising a pin coupled to the blade guide, wherein the blade guide is movable from the inboard position towards the outboard position upon abutment of the pin with an edge of a workpiece upon which the track rests and in response to relative movement between the track body and the workpiece.
5. The track of clause 1, further comprising at least one link pivotably coupling the blade guide to the track body.
6. The track of clause 1, wherein during a transition between the inboard position and the outboard position, the blade guide is configured to translate along an arcuate path relative to the track body.
7. The track of clause 1, further including a biasing member configured to bias the blade guide towards the inboard position.
8. A track configured for use with a saw having a blade, the track comprising:
   a track body having a side surface;
   a first link pivotably coupled to the track body,
   a second link pivotably coupled to the track body and oriented parallel with the first link,
   a blade guide pivotably coupled to the first link and the second link, the blade guide having an inboard side and an opposite outboard side, the blade guide being movable relative to the side surface between an inboard position, in which the inboard side of the blade guide abuts the side surface, and an outboard position, in which a gap is formed between the inboard side of the blade guide and the side surface; and
   a splinter strip coupled to the outboard side of the blade guide, the splinter strip being configured to contact the blade to inhibit splintering of a workpiece while being cut by the blade and the saw is moved along the track body.
9. The track of clause 8, wherein the track body, the first link, the second link, and the blade guide together function as a four-bar linkage such that the blade guide remains parallel relative to the side surface in the inboard position, the outboard position, and during a transition between the inboard position and the outboard position.
10. The track of clause 8, further comprising a retainer configured to inhibit over-pivoting of the second link beyond a desired angle.
11. The track of clause 8, further comprising a first pin coupling the first link to the track body and a second pin coupling the first link to the blade guide.
12. The track of clause 11, wherein the second pin extends downward from the blade guide in a vertical direction and is configured to abut an edge of a workpiece to transition the blade guide between the inboard position and the outboard position.
13. A track saw assembly configured to be supported by and make a cut in a workpiece, the track saw assembly comprising:
   a saw unit including a shoe, a motor mounted upon the shoe, a blade rotatably coupled to the motor, and a blade guard movable between a covering position in which the blade is covered and a retracted position in which the blade is exposed;
   a track body having a first end, a second end, and a side surface, the track body being configured to guide the saw unit between a home position adjacent the first end and an advanced position adjacent the second end, an intermediate position being located between the home position and the advanced position;
   a blade guide coupled to the track body, the blade guide having an inboard side and an opposite outboard side, the blade guide being movable relative to the side surface between an inboard position in which the inboard side of the blade guide abuts the side surface and an outboard position in which a gap is formed between the inboard side of the blade guide and the side surface;
   wherein, as the saw unit is moved from the home position to the advanced position, the blade guard contacts the blade guide to move the blade guard from the covering position to the retracted position, and
   wherein, with the saw unit in the advanced position or the intermediate position, and in response to the track body being moved away from the workpiece, the blade guide is configured to be retracted to the inboard position, and as a result, the blade guard is returned to the covering position.
14. The track saw assembly of clause 13, further comprising a pin coupled to the blade guide, wherein the pin is configured to engage an edge of a workpiece to move the blade guide from the inboard position toward the outboard position in response to an applied force on the track body oriented transverse to the workpiece, and wherein in response to the applied force on the track body being removed, the pin is disengaged from the edge of the workpiece to move the blade guide from the outboard position toward the inboard position.
15. The track saw assembly of clause 13, wherein after the blade guide is retracted to the inboard position, the blade guard is configured to be returned to the covering position in less than 0.2 seconds.
16. The track saw assembly of clause 13, further comprising a first biasing member configured to bias the blade guard towards the retracted position and a second biasing member configured to bias the blade guide towards the inboard position.
17. The track saw assembly of clause 13, further comprising a pin coupled to the blade guide, and wherein the blade guide is retracted towards the inboard position upon lifting the track saw assembly from a workpiece and corresponding misalignment of the pin from an edge of the workpiece.
18. The track saw assembly of clause 13, wherein as the saw unit is moved from the advanced position toward the home position, the blade guard is disengaged with the blade guide such that the blade guard returns toward the covering position.
19. The track saw assembly of clause 16, further comprising a third biasing member configured to bias the saw unit towards the home position.
20. The track saw assembly of clause 13, wherein the blade guide is coupled to the track body such that the blade guide remains parallel to the side surface in the inboard position, the outboard position, and during a transition between the inboard position and the outboard position.

## Claims

1. A track configured for use with a saw having a blade, the track comprising:
a track body having a side surface;
a blade guide having an inboard side and an opposite outboard side, the blade guide being movable relative to the side surface between an inboard position in which the inboard side of the blade guide abuts the side surface and an outboard position in which a gap is formed between the inboard side of the blade guide and the side surface; and
a splinter strip coupled to the outboard side of the blade guide, the splinter strip being configured to contact the blade to inhibit splintering of a workpiece while being cut by the blade and the saw is moved along the track body.

2. The track of claim 1, wherein the blade guide is coupled to the track body such that the blade guide remains parallel relative to the side surface in the inboard position, the outboard position, and during a transition between the inboard position and the outboard position.

3. The track of claim 1 or 2, wherein the track is configured to support a saw unit including a blade and a blade guard which is movable between a covering position in which the blade is covered and a retracted position in which the blade is exposed, and wherein the gap is a first gap formed between the inboard side of the blade guide and the side surface, and wherein in the inboard position, a second gap is formed between the outboard side of the blade guide and an interaction line which represents a threshold for which the blade guide must extend beyond for an end surface of the blade guide to be operable to interact with the blade guard.

4. The track of claim 1, 2 or 3, further comprising a pin coupled to the blade guide, wherein the blade guide is movable from the inboard position towards the outboard position upon abutment of the pin with an edge of a workpiece upon which the track rests and in response to relative movement between the track body and the workpiece.

5. The track of any preceding claim, further comprising at least one link pivotably coupling the blade guide to the track body.

6. The track of any preceding claim, wherein during a transition between the inboard position and the outboard position, the blade guide is configured to translate along an arcuate path relative to the track body.

7. The track of any preceding claim, further including a biasing member configured to bias the blade guide towards the inboard position.

8. A track configured for use with a saw having a blade, the track comprising:
a track body having a side surface;
a first link pivotably coupled to the track body,
a second link pivotably coupled to the track body and oriented parallel with the first link,
a blade guide pivotably coupled to the first link and the second link, the blade guide having an inboard side and an opposite outboard side, the blade guide being movable relative to the side surface between an inboard position, in which the inboard side of the blade guide abuts the side surface, and an outboard position, in which a gap is formed between the inboard side of the blade guide and the side surface; and
a splinter strip coupled to the outboard side of the blade guide, the splinter strip being configured to contact the blade to inhibit splintering of a workpiece while being cut by the blade and the saw is moved along the track body.

9. The track of claim 8, wherein:
the track body, the first link, the second link, and the blade guide together function as a four-bar linkage such that the blade guide remains parallel relative to the side surface in the inboard position, the outboard position, and during a transition between the inboard position and the outboard position; and/or
further comprising a retainer configured to inhibit over-pivoting of the second link beyond a desired angle.

10. The track of claim 8 or 9, further comprising a first pin coupling the first link to the track body and a second pin coupling the first link to the blade guide, preferably wherein the second pin extends downward from the blade guide in a vertical direction and is configured to abut an edge of a workpiece to transition the blade guide between the inboard position and the outboard position.

11. A track saw assembly configured to be supported by and make a cut in a workpiece, the track saw assembly comprising:
a saw unit including a shoe, a motor mounted upon the shoe, a blade rotatably coupled to the motor, and a blade guard movable between a covering position in which the blade is covered and a retracted position in which the blade is exposed;
a track body having a first end, a second end, and a side surface, the track body being configured to guide the saw unit between a home position adjacent the first end and an advanced position adjacent the second end, an intermediate position being located between the home position and the advanced position;
a blade guide coupled to the track body, the blade guide having an inboard side and an opposite outboard side, the blade guide being movable relative to the side surface between an inboard position in which the inboard side of the blade guide abuts the side surface and an outboard position in which a gap is formed between the inboard side of the blade guide and the side surface;
wherein, as the saw unit is moved from the home position to the advanced position, the blade guard contacts the blade guide to move the blade guard from the covering position to the retracted position, and
wherein, with the saw unit in the advanced position or the intermediate position, and in response to the track body being moved away from the workpiece, the blade guide is configured to be retracted to the inboard position, and as a result, the blade guard is returned to the covering position.

12. The track saw assembly of claim 11, further comprising a pin coupled to the blade guide, wherein the pin is configured to engage an edge of a workpiece to move the blade guide from the inboard position toward the outboard position in response to an applied force on the track body oriented transverse to the workpiece, and wherein in response to the applied force on the track body being removed, the pin is disengaged from the edge of the workpiece to move the blade guide from the outboard position toward the inboard position.

13. The track saw assembly of claim 11 or 12:
wherein after the blade guide is retracted to the inboard position, the blade guard is configured to be returned to the covering position in less than 0.2 seconds; and/or
further comprising a first biasing member configured to bias the blade guard towards the retracted position and a second biasing member configured to bias the blade guide towards the inboard position; and/or
further comprising a pin coupled to the blade guide, and wherein the blade guide is retracted towards the inboard position upon lifting the track saw assembly from a workpiece and corresponding misalignment of the pin from an edge of the workpiece.

14. The track saw assembly of claim 11, 12 or 13, wherein as the saw unit is moved from the advanced position toward the home position, the blade guard is disengaged with the blade guide such that the blade guard returns toward the covering position, preferably further comprising a third biasing member configured to bias the saw unit towards the home position.

15. The track saw assembly of any one of claims 11 to 14, wherein the blade guide is coupled to the track body such that the blade guide remains parallel to the side surface in the inboard position, the outboard position, and during a transition between the inboard position and the outboard position.
